# EUROPEAN PATENT SPECIFICATION

(11) **EP 0 689 728 B1**
(45) Date of publication and mention of the grant of the patent: **29.10.1997**
(21) Application number: 94907942.0
(22) Date of filing: 03.02.1994
(51) Int. Cl.: H02G 15/18, H02G 1/14, B29C 61/06

(54) **A PRE-STRETCHED, ELASTOMERIC ARTICLE**
VORGESTRECKTER ELASTOMERER GEGENSTAND
ARTICLE EN ELASTOMERE PREALABLEMENT MIS SOUS TENSION

(30) Priority: 16.03.1993 US 33240
(43) Date of publication of application: 03.01.1996
(73) Proprietor: MINNESOTA MINING AND MANUFACTURING COMPANY, St. Paul, Minnesota 55133-3427 (US)
(72) Inventor: HOPCUS, Ernest, A., Saint Paul, MN 55133-3427 (US); KIRKPATRICK, Robert, M., Saint Paul, MN 55133-3427 (US)
(74) Representative: Hilleringmann, Jochen, Dipl.-Ing.
(86) International application number: US9401146
(87) International publication number: WO9422196

(56) References cited:
- EP-A- 0 101 248
- EP-A- 0 504 035
- EP-A- 0 547 656
- WO-A-90/02037
- DE-A- 1 909 323
- DE-U- 1 719 023
- US-A- 3 515 798

## Description

The present invention relates to pre-stretched tubes (PST) supported in a stretched condition by a rigid core which may be removed to allow the tube to contract into contact with an object to be environmentally protected and/electrically insulated.

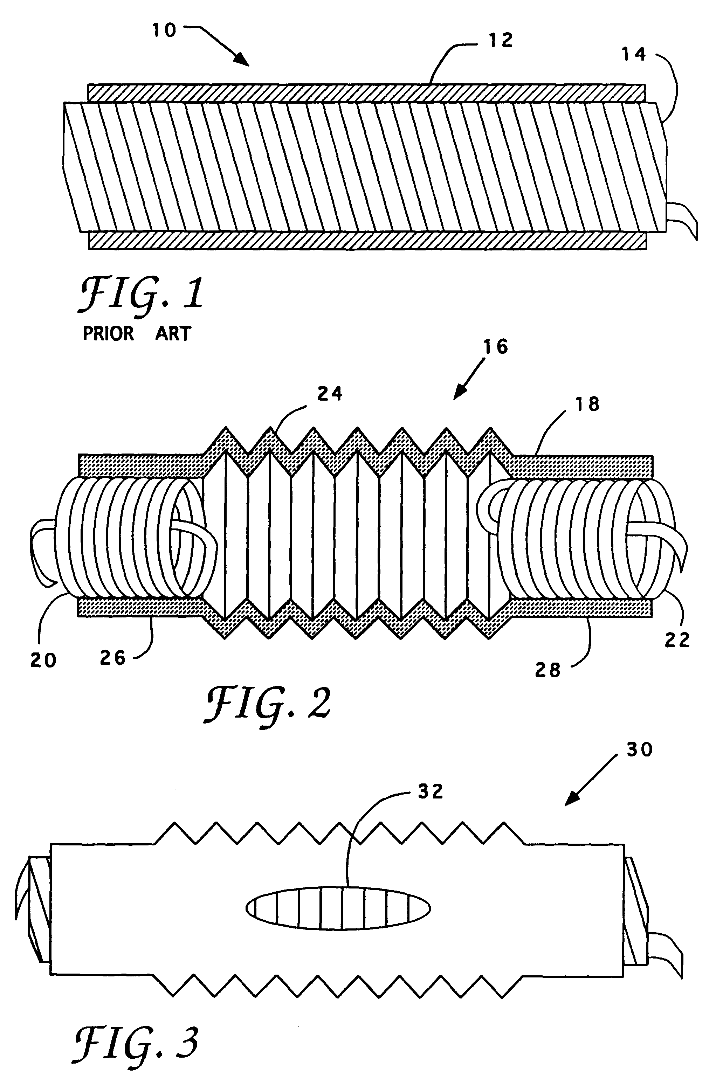

US-A-3,515,798, discloses an assembly of a elastic tube and a rigid polymeric core which supports the tube in a radially-expanded condition. This conventional construction is illustrated in Figure 1. The assembly is typically used to electrically insulate and environmentally protect the connection between two electrical power cables. In use, the PST assembly is slid over the end of one cable and temporarily positioned along the length of the cable at a position removed from the cable end. Then the connection is made between the cables and the PST assembly repositioned over the connection. The core is then removed to allow the PST to contract into contact with the cables at each side of the connection to protect the connection area. The core is made removable by cutting or molding a helical spiral in its inner and/or outer surfaces to define a strip of material helically wound into a tube. By pulling one end of the strip, the core can be unwound at the spiral and the core progressively removed in a continuous length.

While the known PST assembly works well for its intended purpose, there are some situations where it is not feasible to use the PST assembly as described. For example, it frequently happens that the connection between cable must be accomplished in a confined space such as a manhole. There may not be enough exposed length of either cable to allow the PST assembly to be slid along the length of one cable a distance sufficient to expose the cable end for connection. Also, it is sometimes necessary to form the joined cables into a bend in the area of the connection. In either of these situations, and many others, the rigidity of the PST assembly will not permit it to accommodate the requirements of the connection circumstances.

From DE-A-19 09 323 a tube for protecting an electrical joint is known which tube has a central convoluted section arranged between the cylindrical end sections. The known tube is made of a heat recoverable material and its central convoluted portion is provided as a strain relief.

It is the object of the present invention to provide a pre-stretched tube which can be easily use for applications in which the tube is bended and/or compressed.

According to the invention, this object is solved by means of a pre-stretched elastomeric article as defined in accompanying claim 1.

The present invention overcomes the limitations of the above-described PST assembly by providing a pre-stretched, elastomeric article including a molded tube having open ends and an unstretched, convoluted central section, the ends being elastically stretched in the radial direction and including at least a portion which is cylindrical to provide a sealing surface, and two cores independent of each other disposed one at each of the ends for supporting the tube ends in the stretched condition. Each of the cores is removable to permit the tube ends to elastically recover to a diameter smaller than the diameter of the tube ends when supported by the cores.

The convoluted, "bellows" configuration of the central portion of the PST assembly, and the facts that the rigid cores are independent of each other and located only at the ends of the PST assembly, allow the assembly to accommodate a wide variety of unusual circumstances where conventional PST products could not be used. In the examples above of difficult situations, the convolutions of the assembly could be compressed in the situation where only a short length of cable is available to allow access to the cable end and permit a connection to another cable to be accomplished. The PST assembly would then be allowed to expand longitudinally to cover the connection. The increased flexibility of the convoluted section of the PST and the lack of a rigid core in this location, allow the PST assembly to be bent to any desired angle, thus accommodating the second situation posed above.

The present invention will be more thoroughly described with reference to the accompanying drawings, wherein like numbers refer to like parts in the several views, and wherein:
Figure 1 is a longitudinal cross-sectional view of a conventional PST assembly;
Figure 2 is a longitudinal cross-sectional view of a PST assembly according to the present invention; and
Figure 3 is a plan view of another embodiment of a PST assembly according to the present invention.

Figure 1 illustrates a conventional PST assembly, generally indicated as 10, which includes an outer tube 12 of elastomeric material which is stretched in the radial direction and an inner core 14 which supports the tube 12 in the stretched configuration. The core 14 is removable to allow the tube 12 to contract and seal to an object over which the PST assembly was placed. The assembly of Figure 1 has proven very useful in sealing a connection between power cables, although it has much more general application. When used with cables, the PST assembly 10 is slid over the end of one cable and positioned along the length of the cable. The connection is then made between the cables and the PST assembly 10 is repositioned to cover the connection. The core 14 is then removed to allow the tube 12 to contract to cover the connection and seal to each of the cables on either side of the connection.

The PST tubing 12 is a molded or extruded section of an elastomeric polymer, preferably EPM or EPDM, either of which may be modified in accordance with the teachings of US-A-4,363,842 and US-A-5,080,942.

The core 14 is preferably made of a versatile plastic such as polypropylene, polyethylene or polyvinyl chloride. The core 14 may be formed according to any of the methods described in US-A-3,515,798; US-A-4,503,105 or US-A-4,871,599. These publications describe various ways of forming a cylindrical core 14 having a helical line of weakening which spirals from end to end. The core 14 can thus be thought of as a narrow strip which is helically wound to form a cylinder and wherein the adjacent edges of the strip are attached to each other. A free end of the strip is led back through the center of the core 14 and, if pulled upon, will cause the strip to separate at the line of weakening and unwind. It is necessary that the core 14 be unwound from the end opposite the end from which the strip is pulled so that the contracting core 14 does not contract down upon the strip and prevent its removal.

Figure 2 illustrates the preferred embodiment of the invention, which is a PST assembly 16 including a PST tube 18 and two cores 20 and 22. The tube 18 is molded of any of the materials discussed above into a shape which includes a convoluted central portion 24 and two cylindrical ends 26 and 28. The cores 20 and 22 are formed of the materials and in the manner discussed above with respect to Figure 1. Although not shown, each core 20 and 22 has a free end which extends from the end of the cores 20 and 22 adjacent the convoluted section 24, through the core 20 or 22 and out the outer end of the cores 20 and 22. Pulling these free ends will thus cause the cores 20 and 22 to unwind from the inside of the tube 18 toward the outside.

The tube 18 is constructed as shown in Figure 2 to allow the PST assembly 16 to be used in situations where it would be difficult to use the conventional PST assembly 10 shown in Figure 1. The combination of the convolutions and the fact that the cores 20 and 22 do not extend into the convolution area 24 permit the PST assembly great versatility. For example, in tight situations the length of the PST assembly 16 can be compressed to allow a connection to be made and then elongated to cover the connection. The convolution area 24 is also easily bent to accommodate bends in the cable. Neither of these actions could be accomplished with the PST assembly of Figure 1.

Figure 3 illustrates a PST assembly 30 formed as is the PST assembly 16 of Figure 2 but with the addition of a hole 32 which may be used to introduce such things a waterproofing resin to the completed connection after the PST has been positioned over the connection. Since the hole 32 is located at a portion of the assembly 30 which is not stretched to fit over the cores, there is no danger that the hole 32 will cause the material of the PST assembly 30 to tear.

The present invention has been described with respect to only a limited number of embodiments, but many variations are possible. For example, the two ends of the PST tube can be molded to different diameters and/or stretched to different diameters by different sized cores. The material could be thicker at one portion of the tube than at another, or the ends could be molded to include ridges or grooves for sealing or to engage with other molded shapes on the object to be covered by the PST.

## Claims

1. A pre-stretched, elastomeric article comprising:
- a molded tube (18) having open ends (26,28) and an unstretched, convoluted central section (24), said ends (26,28) being elastically stretched in the radial direction and including at least a portion which is cylindrical to provide a sealing surface, and
- two cores (20,22) independent of each other disposed one at each of said ends (26,28) for supporting said tube ends (26,28) in said stretched condition,
- said cores (20,22) being removable to permit said tube ends (26,28) to elastically recover to a diameter smaller than the diameter of said tube ends (26,28) when supported by said cores (20,22).

2. A pre-stretched, elastomeric article according to claim 1 wherein said ends (26,28) have equal diameters when molded.

3. A pre-stretched, elastomeric article according to claim 2 wherein said cores (20,22) have equal diameters.

4. A pre-stretched, elastomeric article according to any one of claims 1 to 3 wherein said article as molded has a uniform material thickness.

5. A pre-stretched, elastomeric article according to any one of claims 1 to 4 wherein said cores (20,22) are polymeric tubes having a cut defining a continuous helically-wound strip, whereby said cores (20,22) may be removed by pulling an end of said strip to unwind said strip.

6. A pre-stretched, elastomeric article according to any one of claims 1 to 5 further including a hole (32) in said unstretched, convoluted central section (24).

## Patentansprüche

1. Vorgestreckter elastomerer Artikel mit:
- einem geformten Schlauch (18) mit offenen Enden (26, 28) und einem ungestreckten gefalteten Mittelabschnitt (24), wobei die Enden (26, 28) in radialer Richtung elastisch gestreckt sind und wenigstens einen zylindrischen Bereich zur Bildung einer Dichtfläche aufweisen, und
- zwei Kernen (20, 22), die unabhängig voneinander an jedem der Enden (26,28) zum Stützen der Schlauchenden (26, 28) im gestreckten Zustand angeordnet sind,
- wobei die Kerne (20, 22) entfernbar sind, um es den Schlauchenden (26, 28) zu ermöglichen, sich elastisch auf einen Durchmesser zurückzustellen, der kleiner als der Durchmesser der Schlauchenden (26, 28) im durch die Kerne (20, 22) gestützten Zustand ist.

2. Vorgestreckter elastomerer Artikel nach Anspruch 1, bei dem die Enden (26, 28) beim Formen den gleichen Durchmesser haben.

3. Vorgestreckter elastomerer Artikel nach Anspruch 2, bei dem die Kerne (20, 22) den gleichen Durchmesser haben.

4. Vorgestreckter elastomerer Artikel nach einem der Ansprüche 1 bis 3, bei dem der geformte Artikel eine gleichmäßige Materialstärke hat.

5. Vorgestreckter elastomerer Artikel nach einem der Ansprüche 1 bis 4, bei dem die Kerne (20, 22) Polymerschläuche mit einem Einschnitt sind, der einen kontinuierlichen schraubenlinienförmig gewundenen Streifen bildet, wobei die Kerne (20, 22) entfernt werden können, indem an einem Ende des Streifens zum Abwickeln desselben gezogen wird.

6. Vorgestreckter elastomerer Artikel nach einem der Ansprüche 1 bis 5, ferner mit einem Loch (32) in dem nicht gestreckten, gefalteten Mittelabschnitt (24).

## Revendications

1. Un article en élastomère préalablement mis sous tension comprenant :
- un tube moulé (18) présentant des extrémités ouvertes (26, 28) et une section centrale convolutée non étirée (24), lesdites extrémités (26, 28) étant élastiquement mises sous tension dans le sens radial et comprenant au moins une partie qui est cylindrique de façon à fournir une surface de raccord hermétique, et
- deux noyaux (20, 22) indépendants l'un de l'autre, disposés chacun sur chacune desdites extrémités (26, 28), pour maintenir lesdites extrémités de tube (26, 28) dans ledit état de tension,
- lesdits noyaux (20, 22) pouvant être supprimés de façon à permettre aux dites extrémités de tube (26, 28) de recouvrer par élasticité un diamètre inférieur au diamètre desdites extrémités de tube (26, 28) lorsqu'elles sont maintenues par lesdits noyaux (20,22).

2. Un article en élastomère préalablement mis sous tension selon la revendication 1, dans lequel lesdites extrémités de tube (26, 28) présentent des diamètres égaux lorsqu'il est moulé.

3. Un article en élastomère préalablement mis sous tension selon la revendication 2, dans lequel lesdits noyaux (20, 22) présentent des diamètres égaux.

4. Un article en élastomère préalablement mis sous tension selon l'une quelconque des revendications 1 à 3, dans lequel ledit article, sous forme moulée, présente une épaisseur de matériau uniforme.

5. Un article en élastomère préalablement mis sous tension selon l'une quelconque des revendications 1 à 4, dans lequel lesdits noyaux (20, 22) sont des tubes polymères présentant une découpe définissant une bande continue enroulée selon un schéma hélicoïdal, lesdits noyaux (20, 22) pouvant être supprimés en tirant sur une extrémité de ladite bande afin de dérouler ladite bande.

6. Un article en élastomère préalablement mis sous tension selon l'une quelconque des revendications 1 à 5, comportant en outre un trou (32) dans ladite section centrale convolutée non étirée (24).
